# EUROPEAN PATENT APPLICATION

(11) **EP 2 548 928 A1**
(43) Date of publication of application: **23.01.2013**
(21) Application number: 11755882.5
(22) Date of filing: 14.03.2011
(51) Int. Cl.: C09B 67/20, C09B 63/00, C09D 11/00

(54) **PIGMENT COMPOSITION**

(30) Priority: 15.03.2010 JP 2010058045
(71) Applicant: Taisho Pharmaceutical Co., Ltd., Tokyo 170-8633 (JP)
(72) Inventor: NAKAJIMA, Toshiki, Tokyo 170-8633 (JP); URABE, Masakiyo, Tokyo 170-8633 (JP); NUMAO, Mariko, Tokyo 170-8633 (JP); IKEDA, Masatoshi, Tokyo 170-8633 (JP); YAMABE, Kenji, Tokyo 170-8633 (JP)
(74) Representative: HOFFMANN EITLE
(86) International application number: PCT/JP2011/001473
(87) International publication number: WO 2011/114691

(57) **Abstract**

The present invention relates to a pigment composition containing a) a pigment, and b) a polyvinyl alcohol/acrylic acid/methyl methacrylate copolymer or an aminoalkyl methacrylate copolymer, and such pigment composition is available in the use for drug medicines and the like, and exhibits better dispersibility.

## Description

### TECHNICAL FIELD

The present invention relates to a pigment composition containing an acrylate-based polymer.

### BACKGROUND ART

A pigment dispersion liquid, generally obtained by dispersing a pigment in a liquid medium, is produced by conducting a dispersing process for a combination of a pigment, water, an organic solvent, a resin and the other additives with a disperser. In particular, a pigment dispersion liquid for producing an inkjet recording pigment ink is prepared by dispersing a pigment in a liquid medium with a dispersing agent such as a water-soluble polymer compound, a surfactant and the like. Higher dispersibility (agglomeration stability, sedimentation stability) is required for the prepared pigment ink, in order to ensure storage stability, discharge stability, and the like. The agglomeration stability and the sedimentation stability of the pigment ink are determined by primarily the performance of the employed dispersing agent.

Various types of dispersing agents including nonionic surfactants, anionic surfactants, block copolymers having hydrophilic block and hydrophobic block, resin emulsions containing resin particles and the like have been examined in the past (see Patent Document 1 and Patent Document 2). However, the conventional dispersing agents are not permitted to be used in medicinal additives, or even if it is permitted to be used, it is difficult to disperse the pigment to obtain an appropriate viscosity. More specifically, when the concentration of the dispersing agent is increased to ensure the agglomeration stability and the sedimentation stability of the pigment ink, problems such as an increase in the viscosity of the ink, a generation of a stick baking in the case of the thermal head, and the like are occurred, and thus it is difficult to satisfy both of the stability of the ink and the performances as the ink. Thus, there has been no report on a technology, which can achieve printing over the tablets such as drug medicine tablets and the like with an inkjet system.

In addition to above, it is described in Patent Documents that acrylate-based polymer containing substances that can be employed for medicinal additives is employed for a dispersing agent of a pigment (see Patent Document 3 and Patent Document 4).

### [RELATED DOCUMENTS]

### [PATENT DOCUMENTS]

[Patent Document 1]
   Japanese Laid-Open Patent Publication No. H01-204979 (1989) [Patent Document 2]
   Japanese Laid-Open Patent Publication No. H10-279870 (1998)
[Patent Document 3]
   Japanese Laid-Open Patent Publication No. H03-121896 (1991)
[Patent Document 4]
   Japanese Laid-Open Patent Publication No. 2001-115199

### DISCLOSURE OF THE INVENTION

The object of the present invention is to provide a pigment composition containing an acrylate-based polymer with an improved dispersibility, which can be utilized for drug medicines and the like.

The present inventors have eagerly made investigations in order to solve the above-described problems, and according to the results of the investigations, it is found that better dispersion of the pigment is achieved by blending polyvinyl alcohol/acrylic acid/methyl methacrylate copolymer or aminoalkyl methacrylate copolymer, and thus the present invention is made on the basis of such finding. More specifically, the present invention relates to
(1) A pigment composition containing a) a pigment, and b) a polyvinyl alcohol/acrylic acid/methyl methacrylate copolymer or an aminoalkyl methacrylate copolymer.
(2) The pigment composition as described in (1), in which the pigment is an aluminum lake.
(3) The pigment composition as described in (1) or (2), in which the content of the above-described component b) is equal to or larger than 0.1 part by weight (pbw) over 1 pbw of the above-described component a).
(4) An ink for printing over a drug medicine, containing the pigment composition described in any one of (1) to (3).

The pigment composition containing acrylate-based polymer of the present invention exhibits enhanced dispersibility.

### DESCRIPTION OF EMBODIMENTS

The polyvinyl alcohol/acrylic acid/methyl methacrylate copolymer employed as a dispersing agent of a pigment of the present invention is a synthetic polymer obtained by a copolymerization of partially hydrolyzed polyvinyl alcohol with acrylate and methyl methacrylate. In addition, the aminoalkyl methacrylate copolymer employed as the dispersing agent of the pigment of the present invention is a copolymer of ethyl acrylate, methyl methacrylate and trimethylammonium ethyl methacrylate chloride (aminoalkyl methacrylate copolymer RS) or a copolymer of methyl methacrylate, butyl methacrylate and dimethylaminoethyl methacrylate (aminoalkyl methacrylate copolymer E), and aminoalkyl methacrylate copolymer RS is preferably employed in the present invention.

The content of the polyvinyl alcohol/acrylic acid/methyl methacrylate copolymer may be preferably 0.1 to 20 pbw, and more preferably 0.1 to 10 pbw, over 1 pbw of the pigment. While it is preferable to blend it at a ratio of equal to or larger than 0.1 pbw in view of ensuring the dispersibility, excessive amount of the blending ratio causes an increased viscosity, which causes, for example, an insufficient discharge when it is employed as the ink for the inkjet equipment, and therefore it is preferable to be contained at equal to or lower than 10 pbw.

The content of the aminoalkyl methacrylate copolymer may be preferably 0.1 to 30 pbw over 1 pbw of the pigment, and more preferably 0.1 to 15 pbw. While it is preferable to blend equal to or larger than 0.1 pbw in view of ensuring the dispersibility, excessive amount of the blending ratio causes an increased viscosity, which causes, for example, an insufficient discharge when it is employed as the ink for inkjet equipment, and therefore it is preferable to be contained at equal to or lower than 15 pbw.

For example, POVACOAT^{TR}, the producer of which is Daido Chemical Corporation and the distribution source of which is Nisshin Kasei Co., Ltd., may be employed for the polyvinyl alcohol/acrylic acid/methyl methacrylate copolymer employed as the dispersing agent of the pigment of the present invention. Various types of grades having different viscosity and pH such as Type F [viscosity: 5.5 mPa·s (5 % aqueous solution, 25 degrees C), pH 4.5 to 5.5], Type R [viscosity: 20 mPa·s (5 % aqueous solution, 25 degrees C), pH 4.5 to 5.5], and Type L [viscosity: 20 mPa·s (5% aqueous solution, 25 degrees C), pH 4.5 to 6.5] are included, and any of these may be available to be used.

In addition, typical aminoalkyl methacrylate copolymer RS includes, for example: EUDRAGIT^{TR} RL100, commercially available from Evonik Degussa Japan Co., Ltd.; EUDRAGIT^{TR} RLPO; EUDRAGIT^{TR} RL30D; EUDRAGIT^{TR} RS100; EUDRAGIT^{TR} RSPO; and EUDRAGIT^{TR} RS30D and the like, and similarly, EUDRAGIT^{TR} E100 commercially available from Evonik Degussa Japan Co., Ltd., or EUDRAGIT^{TR} EPO or the like may be employed for aminoalkyl methacrylate copolymer E. The monomer formulation of EUDRAGIT^{TR} RL series is: ethyl acrylate; methyl methacrylate; and trimethylammonium ethyl methacrylate chloride at a blending ratio of 1:2:0.2, and the monomer formulation of EUDRAGIT^{TR} RS series is: ethyl acrylate; methyl methacrylate; and trimethylammonium ethyl methacrylate chloride at a blending ratio of 1:2:0.1. The monomer formulation of EUDRAGIT^{TR} E series is: methyl methacrylate: butyl methacrylate: dimethylaminoethyl methacrylate at a blending ratio of 1:1:2.

According to the present invention, the pigment compositions with improved dispersibility can be obtained by employing polyvinyl alcohol/acrylic acid/methyl methacrylate copolymer or amino alkylmethacrylate copolymer, without a need for employing the conventional dispersing agent for the pigment such as anionic or nonionic surfactant and the like.

The types of the pigments available in the present invention are not particularly limited, and typical exemplified pigments include inorganic pigments such as carbon black, medical charcoal, titanium dioxide, iron sesquioxide, yellow iron sesquioxide, black iron oxide, calcium carbonate and the like. In addition, the available pigments includes edible tar dyes such as Red No.2 (known as Amaranth), Red No. 3 (known as Erythrosine), Red No. 102 (known as New Coccine), Red No. 104 (known as Phloxine B), Red No. 105 (known as Rose Bengal), Red No. 106 (known as Acid Red), Yellow No. 4 (known as Tartrazine), Yellow No. 5 (known as Sunset Yellow FCF), Green No. 3 (known as Fast Green FCF), Blue No. 1 (known as Brilliant Blue FCF), Blue No. 2 (known as Indigo Carmine), Red No. 227 (known as Fast Acid Magenta), Red No. 230-(1) (known as Eosine YS), Red No. 230-(2) (known as Eosine YSK), Red No. 231 (known as Phloxin BK), Red No. 232 (known as Rose Bengal K), Orange No. 205 (known as Orange II), Orange No. 207 (known as Erythrosine Yellowish NA), Yellow No. 202-(1) (known as Uranine), Yellow No. 202-(2) (known as Uranine K), Yellow No. 203 (known as Quinoline Yellow WS), Green No. 201 (known as Alizarine Cyanine Green F), Green No. 204 (known as Pyranine Conc.), Green No. 205 (known as Light Green SF Yellowish), Blue No. 205 (known as Alphazurine FG), Brown No. 201 (known as Resorcin Brown), Red No. 401 (known as Violamine R), Red No. 502 (known as Ponceau 3R), Red No. 503 (known as Ponceau R), Red No. 504 (known as Ponceau SX), Red No. 506 (known as Fast Red S), Orange No. 402 (known as Orange I), Yellow No. 402 (known as Polar Yellow 5G), Yellow No. 403-(1) (known as Naphthol Yellow S), Yellow No. 406 (known as Metanil Yellow), Yellow No. 407 (known as Fast Light Yellow 3G), Green No. 402 (known as Guinea Green B), Purple No. 401 (known as Alizurol Purple), Black No. 401 (known as Naphthol Blue Black), and aluminum lakes thereof, which are available for the use in drug medicines. These pigments may be preferably blended at a ratio within a range of from 0.1 to 20 % by weight over the pigment composition of the present invention.

The pigment composition containing acrylate-based polymer according to the present invention may be employed as an ink or paint. In addition, the pigment composition of the present invention exhibits better dispersibility of the pigment and is stable against the agglomeration or the sedimentation, and thus in particular, may be preferably employed as the ink for the inkjet applications. In addition, the present invention employs the polyvinyl alcohol/acrylic acid/methyl methacrylate copolymer or amino alkylmethacrylate copolymer of polymethacrylate resin as a dispersing agent, and thus may be employed to prepare an edible pigment composition by employing a combination with an edible pigment. More specifically, the pigment composition may be employed as, for example, an ink for printing over the tablets such as drug medicines and the like.

The pigment composition containing acrylate-based polymer of the present invention may be prepared by adding a polyvinyl alcohol/acrylic acid/methyl methacrylate copolymer or an aminoalkyl methacrylate copolymer in a liquid medium in advance and then adding a pigment, or by mixing a pigment and a liquid medium and then adding a polyvinyl alcohol/acrylic acid/methyl methacrylate copolymer or an aminoalkyl methacrylate copolymer, and thereafter dispersing the pigment by employing a disperser such as a high pressure homogenizer, a ball mill, a sand mill, a sand grinder, a bead mill and the like.

Water or a mixed solvent of water and a water-soluble organic solvent may be preferable for the above-described liquid medium. Typical water-soluble organic solvents may include, for example: alcohols such as methyl alcohol, ethyl alcohol, n-butyl alcohol, isobutyl alcohol, tert-butyl alcohol, n-propyl alcohol, inpropyl alcohol and the like; amides such as dimethylformamide, dimethylacetamide and the like; ketones such as acetone, methyl ethyl ketone and the like; ethers such as tetrahydrofuran, dioxane, ethylene glycol methyl ether, ethylene glycol ethyl ether, diethylene glycol methyl ether, diethylene glycol ethyl ether, triethylene glycol monomethyl ether, triethylene glycol monoethyl ether and the like; polyalcohols such as ethylene glycol, propylene glycol, butylene glycol, diethylene glycol, triethylene glycol, 1,2,6-hexanetriol, thiodiglycol, polyethylene glycol, polypropylene glycol, glycerin, diglycerol, polyglycerin and the like; N-methylpyrrolidone; 1,3-dimethyl-2-imidazolidinone; and the like.

Additives such as water soluble resins, organic amines, surfactants, PH adjusters, chelating agents, antiseptic agents, viscosity adjusters, antifoaming agents and the like may be added to the pigment composition containing acrylate-based polymer of the present invention, as required.

While the present invention will specifically described in reference to Examples and Comparative Examples as described below, it is understood that the scope of the present invention is not limited to these Examples.

### EXAMPLES

### Example 1

5 grams (g) of Blue No. 2 aluminum lake, 2 g of a polyvinyl alcohol/acrylic acid/methyl methacrylate copolymer, 20 g of glycerin and 73 g of purified water were mixed and stirred to obtain a dispersion liquid. A pulverization processing was conducted for the dispersion liquid by employing an agitator and zirconia beads. The proportion of the beads and the sample in volume ratio at the time of the mixing and the pulverization was 1:1, and two-step pulverization processing of rough pulverization and fine pulverization was conducted. The pulverization processing, in this case, was conducted at the room temperature (at about 25 degrees C).

### Examples 2 to 5, Comparative Examples 1 to 14

Similar methods as employed in Example 1 were conducted to produce pigment compositions of Comparative Example 1 without blending a dispersing agent, Examples 2 to 5 with dispersing agents of aminoalkyl methacrylate copolymers instead of polyvinyl alcohol/acrylic acid/methyl methacrylate copolymer, and Comparative Examples 6 to 14 with other dispersing agents. The formulations of the compositions of Examples 1 to 5 and Comparative Examples 1 to 14 are shown in Table 1 and Table 2. The brand names and the grades of the employed acrylate-based polymers are indicated in the parenthesis in the component in Table 1. In addition to above, the content of the aminoalkyl methacrylate copolymer RS in EUDRAGIT^{TR} RL30D and EUDRAGIT^{TR} RS30D, the content of the ethyl acrylate/methyl acid methacrylate copolymer in EUDRAGIT^{TR} NE3uD, and the content of the "methacrylate copolymer LD" in EUDRAGIT^{TR} L30D-55 are all equally 30 % by weight. The units of the blending ratio of the respective components in the tables are "gram (g). "

The evaluations on the dispersibility of the above-described pigment compositions were carried out by an observation with a polarization-microscope at 400 magnifications for the state of the dispersion of Blue No. 2 aluminum lake, which was mixed and then was left at a room temperature for 24 hours. The results are shown in Table 1 and Table 2. The evaluated results of the dispersibility in these tables indicate the following states: AA better dispersed; and BB not dispersed.

[Table 1]

**Table 1**

| COMPONENTS | EXAMPLES | | | | | COMPARATIVE EXAMPLES | | | | |
|---|---|---|---|---|---|---|---|---|---|---|
| | 1 | 2 | 3 | 4 | 5 | 1 | 2 | 3 | 4 | 5 |
| EDIBLE BLUE NO. 2 ALUMINUM LAKE | 5 | 5 | 5 | 5 | 5 | 5 | 5 | 5 | 5 | 5 |
| POLYVINYL ALCOHOL/ACRYLIC ACID/METHYL METHACRYLATE COPOLYMER(POVACOAT^{TR}) | 2 | 0 | 0 | 0 | 0 | 0 | 0 | 0 | 0 | 0 |
| AMINOALKYL METHACRYLATE COPOLYMER RS (EUDRAGIT^{TR} RL30D) | 0 | 5 | 20 | 0 | 0 | 0 | 0 | 0 | 0 | 0 |
| AMINOALKYL METHACRYLATE COPOLYMER RS (EUDRAGIT^{TR} RS30D) | 0 | 0 | 0 | 5 | 20 | 0 | 0 | 0 | 0 | 0 |
| ETHYL ACRYLATE/METHYL METHACRYLATE COPOLYMER DISPERSION LIQUID (EUDRAGIT^{TR} NE30D) | 0 | 0 | 0 | 0 | 0 | 0 | 5 | 20 | 0 | 0 |
| METHACRYLATE COPOLYMER LD (EUDRAGIT^{TR} L30D-55) | 0 | 0 | 0 | 0 | 0 | 0 | 0 | 0 | 5 | 20 |
| GLYCERIN | 20 | 20 | 20 | 20 | 20 | 20 | 20 | 20 | 20 | 20 |
| PURIFIED WATER | 73 | 70 | 55 | 70 | 55 | 75 | 70 | 55 | 70 | 55 |
| GROSS QUANTITY | 100 | 100 | 100 | 100 | 100 | 100 | 100 | 100 | 100 | 100 |
| DISPERSIBILITY | AA | AA | AA | AA | AA | BB | BB | BB | BB | BB |

[Table 2]

**Table 2**

| COMPONENTS | COMPARATIVE EXAMPLES | | | | | | | | |
|---|---|---|---|---|---|---|---|---|---|
| | 6 | 7 | 8 | 9 | 10 | 11 | 12 | 13 | 14 |
| EDIBLE BLUE No. 2 ALUMINUM LAKE | 5 | 5 | 5 | 5 | 5 | 5 | 5 | 5 | 5 |
| POLYOXYETHYLENE HYDROGENATED CASTOR OIL | 1 | 0 | 0 | 0 | 0 | 0 | 0 | 0 | 0 |
| BENZALKONIUM CHLORIDE | 0 | 1 | 0 | 0 | 0 | 0 | 0 | 0 | 0 |
| GLYCERINE FATTY ACID ESTER | 0 | 0 | 1 | 0 | 0 | 0 | 0 | 0 | 0 |
| POLYETHYLENE GLYCOL | 0 | 0 | 0 | 1 | 0 | 0 | 0 | 0 | 0 |
| POLYVINYL ALCOHOL | 0 | 0 | 0 | 0 | 1 | 0 | 0 | 0 | 0 |
| HYDROXYPROPYL CELLULOSE | 0 | 0 | 0 | 0 | 0 | 1 | 0 | 0 | 0 |
| HYDROXYPROPYL METHYLCELLULOSE | 0 | 0 | 0 | 0 | 0 | 0 | 1 | 0 | 0 |
| SODIUM CARBOXYMETHYLCELLULOSE | 0 | 0 | 0 | 0 | 0 | 0 | 0 | 0.1 | 0 |
| SODIUM POLYACRYLATE | 0 | 0 | 0 | 0 | 0 | 0 | 0 | 0 | 0.1 |
| GLYCERIN | 20 | 20 | 20 | 20 | 20 | 20 | 20 | 20 | 20 |
| PURIFIED WATER | 74 | 74 | 74 | 74 | 74 | 74 | 74 | 74.9 | 74.9 |
| GROSS QUANTITY | 100 | 100 | 100 | 100 | 100 | 100 | 100 | 100 | 100 |
| DISPERSIBILITY | BB | BB | BB | BB | BB | BB | BB | BB | BB |

According to the results in Table 1 and Table 2, it was found that improved dispersibility was obtained only in the case of blending the polyvinyl alcohol/acrylic acid/methyl methacrylate copolymer or the aminoalkyl methacrylate copolymer (EUDRAGIT^{TR} RL30D or EUDRAGIT^{TR} RS3GD).

### [Industrial Applicability]

Since the pigment composition containing acrylate-based polymer of the present invention exhibits better dispersibility, such composition can be preferably employed in an ink for a writing implement such as an ordinary ball-point pen or the like, or a paint, or in particular, an inkjet recording pigment ink.

## Claims

1. A pigment composition containing
a) a pigment, and
b) a polyvinyl alcohol/acrylic acid/methyl methacrylate copolymer or an aminoalkyl methacrylate copolymer.

2. The pigment composition according to claim 1, wherein the pigment is an aluminum lake.

3. The pigment composition according to claim 1 or 2, wherein the content of the component b) is equal to or larger than 0.1 part by weight (pbw) over 1 pbw of the component a).

4. An ink for printing over a drug medicine, containing the pigment composition according to any one of claims 1 to 3.
